# EUROPEAN PATENT SPECIFICATION

(11) **EP 3 457 415 B1**
(45) Date of publication and mention of the grant of the patent: **27.01.2021**
(21) Application number: 17796187.7
(22) Date of filing: 10.05.2017
(51) Int. Cl.: H01F 5/02, H01F 27/32, H01F 27/29, G01L 3/10, B62D 5/04

(54) **COIL BOBBIN WITH A COIL AND TORQUE DETECTION DEVICE**
SPULENKÖRPER MIT EINER SPULE UND DREHMOMENTERFASSUNGSVORRICHTUNG
CORPS DE BOBINE AVEC UNE BOBINE ET DISPOSITIF DE DÉTECTION DU TORQUE

(30) Priority: 11.05.2016 JP 2016095497
(43) Date of publication of application: 20.03.2019
(73) Proprietor: NSK Ltd., Tokyo 141-8560 (JP)
(72) Inventor: HATANAKA, Kazuyuki, Fujisawa-shi Kanagawa 251-8501 (JP); SHIGETA, Taishi, Maebashi-shi Gunma 371-8527 (JP); NISHIOKA, Yusuke, Maebashi-shi Gunma 371-8527 (JP)
(74) Representative: SSM Sandmair
(86) International application number: PCT/JP2017/017691
(87) International publication number: WO 2017/195827

(56) References cited:
- WO-A1-2016/181923
- JP-A- H1 198 742
- JP-A- 2007 205 952
- JP-A- 2007 205 952
- JP-U- H0 291 312
- JP-U- H0 557 812

## Description

### Field

The present invention relates to a coil bobbin with a coil and a torque detection device.

### Background

Conventionally, as a technique for holding a detection coil constituting a torque detection device in a yoke, there is a technique described in Patent Literature 1, for example. In the technique described in Patent Literature 1, two pins projecting outward in a radial direction of the coil bobbin are disposed in a substantially rectangular parallelepiped terminal attachment portion provided in a flange portion of the coil bobbin. One end side of the detection coil is wound around one of the pins, a cylindrical portion of the coil bobbin is surrounded between both ends of the detection coil, and the other end side of the detection coil is wound around the other pin.

### Citation List

### Patent Literature

Patent Literature 1: Japanese Patent No. 3346268

JP 2007-205952 A relates to a coil member for torque sensor. A first coil unit constitutes a portion of a coil unit for detecting the amount of twists of a torsion bar spring in a housing, which comprises a first coil bobbin integrally formed with a coil winding section, an inside flange and an outside flange, and a terminal mounting section mounted on the outer circumference side of the inside flange; and a yoke member fitting from the outer surface in the axial direction of the first coil bobbin and having a notch window face the terminal mounting section to the outside. A guide groove is provided for completing winding of the termination section of the first coil conductive wire that is drawn out from the coil winding section and guiding the section towards a terminal section, on the upper surface of the terminal mounting section, and thereby the terminal section of the first coil conductive wire is not exposed from the upper surface of the terminal mounting section.

WO 2016/181923 A1 relates to a torque detecting device, electric power steering device, and vehicle. Provided is a torque detection device whereby it is possible to reduce, in comparison with the prior art, the amount of deformation of a detection coil when a coil bobbin on which a detection coil is wound in a yoke is pressed in an axial direction and retained. A torque sensor is provided with: a pair of coils; coil bobbins on which the coils, respectively, are wound; two yokes for retaining the coil bobbins, respectively; a single yoke cover press-fitted in the inside diameter of the yokes; and pressing parts for acting between the coil bobbins during assembly and pressing the coil bobbins in the axial direction, the pressing parts being provided so as to protrude radially outward in a plurality of positions in the circumferential direction of a radial outside end part of flange parts of the coil bobbins.

JP 11-098742 relates to a coil bobbin of stepping motor. A coil bobbin is equipped with a cylindrical bobbin, a pair of flanges extended outward on both sides of the bobbin, and a terminal mount for leading a coil wire extended from one periphery of the second flange. An inner side face on the side of the bobbin of the second flange is made into a plane with the face on the side of the bobbin of the terminal mount. A projection is extended at the section, where the first flank of the terminal mount and the outside flank of the second flange are connected with each other. At the terminal mount, the corner where the inner flank, a head face, and a second flank cross one another is chamfered, thereby being made into a chamfered part.

### Technical Problem

However, in the technique described in the above-mentioned Patent Literature 1, since a corner portion (a portion forming a side of a rectangular parallelepiped) of the terminal attachment portion is disposed on a wiring path of a conductive wire (coil winding) forming the detection coil, the conductive wire may be damaged. Alternatively, when a coil bobbin and a yoke are assembled, or when the detection coil is incorporated in a housing, there is a possibility that the conductive wire is damaged by coming into contact with the yoke and the housing.

It is an object of the present invention to provide an improved and useful coil bobbin with a coil in which the above-mentioned problems are eliminated.

### Solution to the problem

In order to achieve the above-5 mentioned object, there is provided a coil bobbin with a coil according to claim 1. In addition, there is provided a torque detection device according to claim 4. Advantageous embodiments are defined by the dependent claims.

### Advantageous Effects of Invention

According to the present invention, it is possible to reduce the possibility that the conductive wire is damaged.

### Brief Description of Drawings

FIG. 1 is a cross-sectional view illustrating a main part of an electric power steering apparatus including a torque detection device according to a first embodiment, not forming part of the present invention.
FIG. 2 is a diagram illustrating a configuration of a torque detection device.
FIG. 3 is an exploded perspective view illustrating a structural member of a torque detection unit according to the first embodiment.
FIG. 4 is a perspective view illustrating a state where the torque detection unit according to the first embodiment is assembled.
FIG. 5 is an enlarged view of a range indicated by a circle V in FIG. 3.
FIG. 6 is an arrow view taken along a line VI of FIG. 5.
FIG. 7 is a perspective view of a coil bobbin with a coil according to a second embodiment, forming part of the present invention.
FIG. 8 is a front view of the coil bobbin according to the second embodiment.
FIG. 9 is a side view of the coil bobbin according to the second embodiment.
FIG. 10 is a top view of the coil bobbin according to the second embodiment.
FIG. 11 is a front view when a pair of coil bobbins according to the second embodiment is assembled.
FIG. 12 is a top view of a torque detection unit according to the second embodiment.
FIG. 13 is a perspective view when the torque detection unit according to the second embodiment is incorporated in a housing.
FIG. 14 is a top view for explaining a relationship between the torque detection unit and the housing according to the second embodiment.

### Description of Embodiments

An embodiment of the invention will be described in detail with reference to the drawings. 7-14. The present invention is not limited by the contents described in the following embodiment. In addition, the constituent elements described below include those which can be easily assumed by those skilled in the art and are substantially the same. Further, the constituent elements described below can be appropriately combined. It should be noted that, for the purpose of explanation of the embodiment, the drawings are illustrated by appropriately changing the actual size and shape.

### (First embodiment, nor forming part of the present invention)

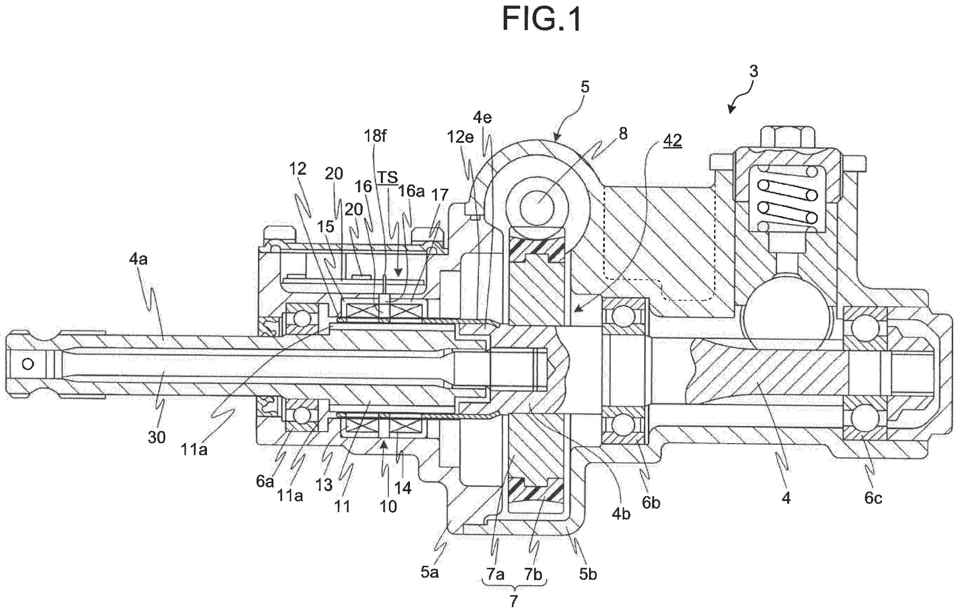

FIG. 1 is a cross-sectional view illustrating a main part of an electric power steering apparatus including a torque detection device according to a first embodiment. As illustrated in FIG. 1, an electric power steering apparatus 3 includes a pinion shaft 4, a housing 5, a first bearing 6a, a second bearing 6b, a third bearing 6c, a worm wheel 7, a worm 8, a torsion bar 30, and a torque detection device TS.

The pinion shaft 4 transmits steering force applied by a driver to a steering wheel (not illustrated) to a steerable wheel (not illustrated). Further, the pinion shaft 4 has an input shaft 4a and an output shaft 4b.

The input shaft 4a forms a portion on a steering wheel side of the pinion shaft 4. One end of the input shaft 4a is connected to the steering wheel via a steering shaft (not illustrated) or the like. The other end of the input shaft 4a is connected to one end of the output shaft 4b via the torsion bar 30. The output shaft 4b forms a part of the pinion shaft 4 on the side of the steerable wheel. The other end of the output shaft 4b is connected to the steerable wheel via a steering gear (not illustrated) or the like.

The housing 5 has a first housing 5a and a second housing 5b. The first housing 5a is disposed on an input shaft 4a side and the second housing 5b is disposed on an output shaft 4b side.

The first bearing 6a is disposed inside the first housing 5a. In addition, the first bearing 6a rotatably supports the input shaft 4a. The second bearing 6b is disposed at a position closer to the first bearing 6a than the third bearing 6c inside the second housing 5b. The third bearing 6c is disposed at a position farther from the first bearing 6a than the second bearing 6b inside the second housing 5b. In addition, the second bearing 6b and the third bearing 6c rotatably support the output shaft 4b.

The worm wheel 7 is fixed to the output shaft 4b and rotates integrally with the output shaft 4b in a state where the rotating shaft is coaxial with the output shaft 4b. The worm wheel 7 has a hub 7a and a tooth portion 7b. The hub 7a is made of metal. The tooth portion 7b is made of a synthetic resin and is integrally fixed to the hub 7a.

The worm 8 is disposed in the second housing 5b and is driven by an electric motor (not illustrated) connected to a reduction gear 42. Further, a gear of the worm 8 is connected to the tooth portion 7b of the worm wheel 7. The reduction gear 42 is constituted by a worm gear mechanism connected to the output shaft 4b.

The torsion bar 30 is disposed inside the input shaft 4a. The input shaft 4a, the output shaft 4b, and the torsion bar 30 are coaxially disposed. One end of the torsion bar 30 is pin-coupled to the input shaft 4a. The other end of the torsion bar 30 is spline-coupled to the output shaft 4b.

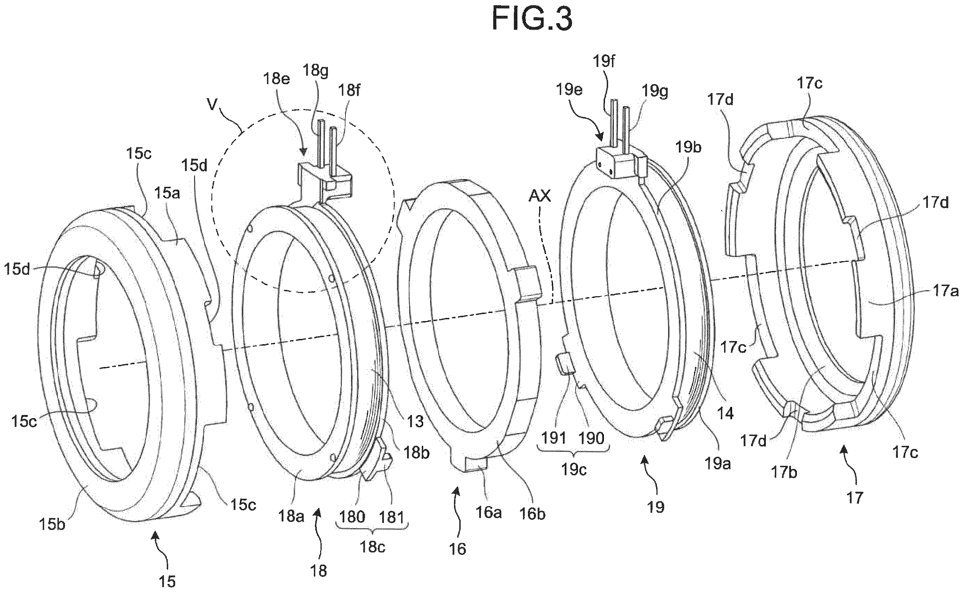

The torque detection device TS is a device that detects torque between the input shaft 4a and the output shaft 4b. The torque detection device TS includes a torque detection unit 10 and a circuit board 20. The torque detection unit 10 includes a sensor shaft portion 11, a cylindrical member 12, a first coil 13, a second coil 14, a yoke cover 16, a first yoke 15, a second yoke 17, a first coil bobbin 18 (see FIG. 3), and a second coil bobbin 19 (see FIG. 3).

The sensor shaft portion 11 is formed on the input shaft 4a. Specifically, the sensor shaft portion 11 forms a portion of the input shaft 4a having the largest outer diameter. The sensor shaft portion 11 is made of a magnetic material.

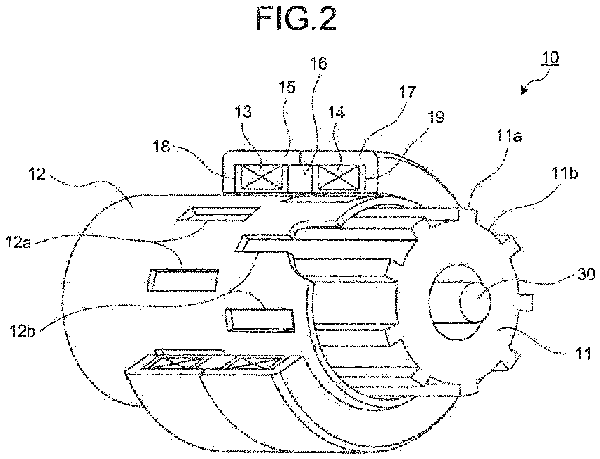

FIG. 2 is a diagram illustrating a configuration of the torque detection device. As illustrated in FIG. 2, on the surface of the sensor shaft portion 11, a plurality of ridges 11a and a plurality of groove portions 11b are provided. Each of the ridges 11a has a shape extending in an axial direction of the sensor shaft portion 11. In addition, each of the ridges 11a is provided at equal intervals along a circumferential direction of the sensor shaft portion 11. Each of the groove portions 11b is disposed between the adjacent ridges 11a.

The cylindrical member 12 is made of a conductive nonmagnetic material, for example, aluminum, and is formed in a cylindrical shape. The cylindrical member 12 is disposed radially outward of the sensor shaft portion 11 inside the first housing 5a (see FIG. 1). Specifically, the cylindrical member 12 approaches the sensor shaft portion 11 and is disposed coaxially with the sensor shaft portion 11.

The cylindrical member 12 includes a plurality of first windows 12a and a plurality of second windows 12b. The first windows 12a are disposed at equal intervals along a circumferential direction of the cylindrical member 12 at a position facing the ridge 11a. Each of the second windows 12b has the same shape as each of the first windows 12a. The second windows 12b are disposed at regular intervals along the circumferential direction of the cylindrical member 12. Further, each of the second windows 12b is disposed at a position where a phase in the circumferential direction of the cylindrical member 12 is different from the first window 12a and at a position shifted in the axial direction.

Furthermore, as illustrated in FIG. 1, the cylindrical member 12 has an extended portion 12e at the end on the output shaft 4b side. The extended portion 12e is fixed to the outside of an end 4e of the output shaft 4b.

As illustrated in FIG. 1, on the inner side of the first housing 5a, the first coil 13 is disposed on the outer side in a radial direction of the sensor shaft portion 11 than the cylindrical member 12. Furthermore, as illustrated in FIG. 2, the first coil 13 is disposed coaxially with the cylindrical member 12 and is disposed at a position surrounding the plurality of first windows 12a.

In a state where a coil distal end is bound and soldered to a terminal 18f press-fitted into the first coil bobbin 18 (see FIG. 3)), the conductive wire (output line) forming the first coil 13 is inserted into a through hole provided at the circuit board 20 (see FIG. 1) and connected by soldering.

On the inner side of the first housing 5a, the second coil 14 is disposed on the outer side in the radial direction of the sensor shaft portion 11 than the cylindrical member 12. In addition to this, the second coil 14 is disposed closer to the output shaft 4b than the first coil 13. As illustrated in FIG. 2, the second coil 14 is disposed coaxially with the cylindrical member 12 and is disposed at a position surrounding the plurality of second windows 12b.

Therefore, the cylindrical member 12 is disposed between the sensor shaft portion 11 and the first coil 13 and the second coil 14. Similarly to the conductive wire forming the first coil 13, in a state where the coil distal end is bound and soldered to a terminal (not illustrated in FIG. 1) press-fitted into the second coil bobbin 19, the conductive wire forming the second coil 14 is inserted into the through hole provided in the circuit board 20 and connected by soldering.

As illustrated in FIG. 2, the first yoke 15 is formed in an annular shape, and is fixed inside the first housing 5a to surround the cylindrical member 12 and the first coil 13. As a result, the first yoke 15 holds the first coil bobbin 18 around which the first coil 13 is wound.

Similarly to the first yoke 15, the second yoke 17 is formed in an annular shape, and is fixed inside the first housing 5a to surround the cylindrical member 12 and the second coil 14. As a result, the second yoke 17 holds the second coil bobbin 19 around which the second coil 14 is wound. The second yoke 17 is disposed at a position closer to the output shaft 4b than the first yoke 15.

The yoke cover 16 is formed in a substantially ring shape and surrounds the cylindrical member 12 from the outer peripheral side. The yoke cover 16 is disposed between the first coil 13 and the second coil 14 on the outer peripheral side of the cylindrical member 12.

In the first embodiment, as an example, a case where the first coil bobbin 18 and the second coil bobbin 19 are formed of a reel-like member made of a nonconductor such as plastic will be described. Around the first coil bobbin 18 and the second coil bobbin 19, the paired detection coils (the first coil 13 and the second coil 14) are respectively wound. Further, the first coil bobbin 18 and the second coil bobbin 19 are fixed to the first housing 5a coaxially with the input shaft 4a and the output shaft 4b.

On the circuit board 20, a torque calculation circuit (not illustrated) is mounted. The torque calculation circuit is a circuit constituting the torque detection device TS. Further, the torque calculation circuit detects the output voltage of the first coil 13 and the output voltage of the second coil 14. Then, steering torque is detected based on a difference between the output voltage of the first coil 13 and the output voltage of the second coil 14. The steering torque is a torque applied to the steering wheel and transmitted to the input shaft 4a.

### (Detailed Configuration of First Coil Bobbin 18 and Second Coil Bobbin 19)

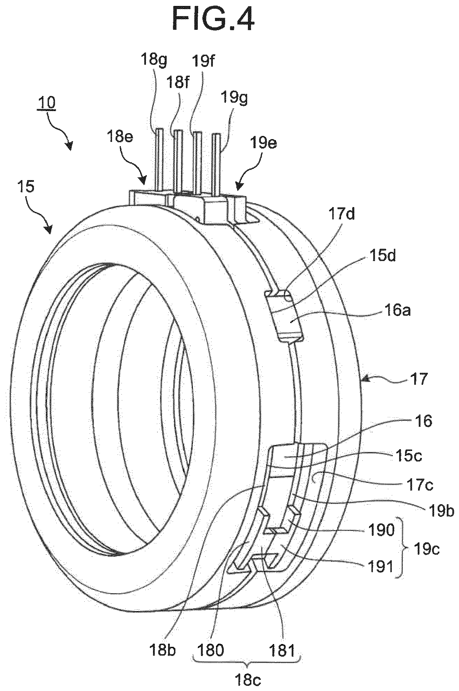

FIG. 3 is an exploded perspective view illustrating a structural member of the torque detection unit according to the first embodiment. FIG. 4 is a perspective view illustrating a state where the torque detection unit according to the first embodiment is assembled. As illustrated in FIGS. 3 and 4, the first coil bobbin 18 has a pair of flange portions 18a, 18b, two pressing portions 18c (only one pressing portion 18c is illustrated in FIG. 3), a terminal attachment portion 18e, and the two terminals 18f, 18g. A first coil 13 is wound around a groove portion between the flange portions 18a, 18b of the first coil bobbin 18.

Similarly to the first coil bobbin 18, the second coil bobbin 19 has a pair of flange portions 19a, 19b, two pressing portions 19c, a terminal attachment portion 19e, and two terminals 19f, 19g. The second coil 14 is wound around a groove portion between the flange portions 19a, 19b of the second coil bobbin 19.

In the present embodiment, two first coil bobbin 18 and the second coil bobbin 19 having the same shape are opposed to each other. In the following description, the configuration of the first coil bobbin 18 will be described. Each of the second coil bobbin 19 and each element have the same structure as that of the first coil bobbin 18, and a detailed description thereof will be omitted.

In a state where the terminal attachment portion 18e is positioned at the upper end of the first coil bobbin 18 as seen from a central axis AX direction of the first coil bobbin 18, the two pressing portions 18c are line-symmetrically formed with a perpendicular line passing through the center of the first coil bobbin 18 as the axis of symmetry. Therefore, it is possible to form (commonize) the first coil bobbin 18 and the second coil bobbin 19 by a common member. It should be noted that the number of the pressing portions 18c can be appropriately selected as long as the number is two or more for one first coil bobbin 18.

Each of the pressing portions 18c includes a base portion 180 and a claw portion 181. In the base portion 180, a part of the flange portion 18b is formed in a shape projecting outward in a radial direction of the first coil bobbin 18. In addition, the base portion 180 is formed in a rectangular flat plate shape as seen from the central axis AX direction.

The length of the claw portion 181 of the first coil bobbin 18 and a claw portion 191 of the second coil bobbin 19 along the central axis AX direction is set in consideration of the time of assembling the torque detection unit 10. Specifically, as illustrated in FIG. 4, at the time of assembling the torque detection unit 10, the length of the two claw portions 181, 191 along the central axis AX direction is set to such a length that the ends of the two claw portions 181, 191 collide with each other and push each other.

Here, as illustrated in FIG. 4, in a state where the torque detection unit 10 is assembled, the first coil bobbin 18 and the second coil bobbin 19 are disposed on the same axis with the yoke cover 16 interposed therebetween. That is, the yoke cover 16 is disposed between the flange portion 18b and the flange portion 19b facing each other.

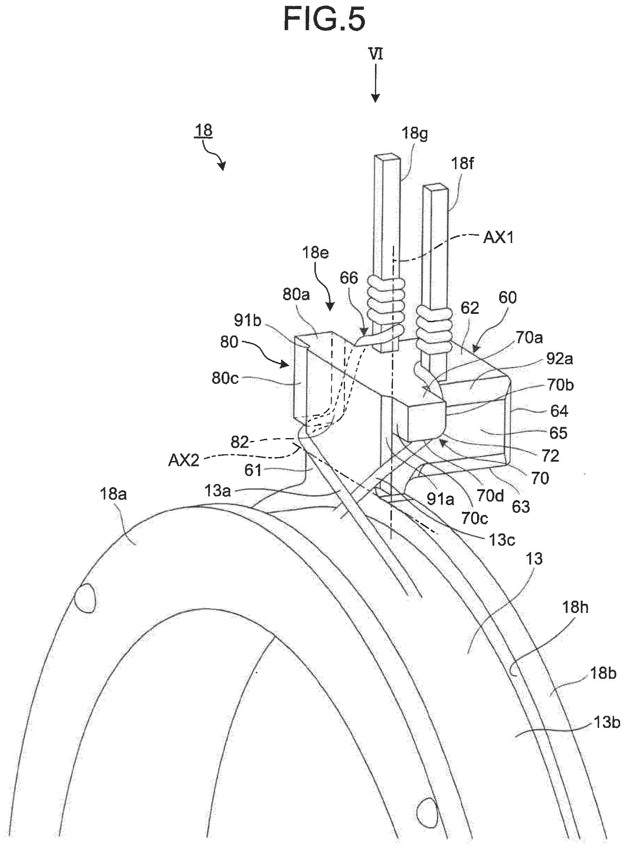

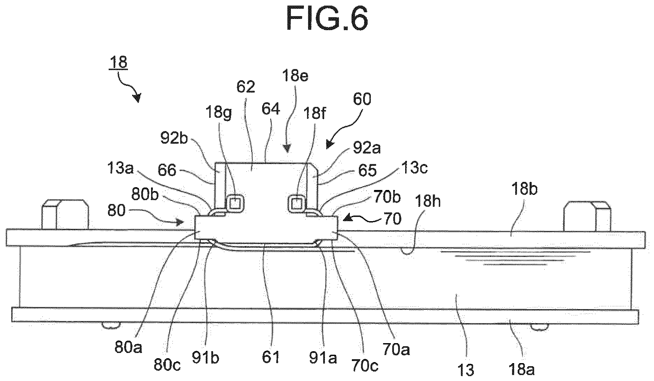

Next, the terminal attachment portion 18e will be described. FIG. 5 is an enlarged view of a range indicated by a circle V in FIG. 3. FIG. 6 is an arrow view taken along a line VI of FIG. 5. As illustrated in FIG. 3, the terminal attachment portion 18e is formed on the outer peripheral surface of the flange portion 18b. Further, the terminal attachment portion 18e farther projects outward in the radial direction of the first coil bobbin 18 from the upper end of the outer peripheral surface of the flange portion 18b.

As illustrated in FIGS. 5 and 6, the terminal attachment portion 18e has a main body portion 60, a first projecting portion 70, and a second projecting portion 80. The main body portion 60 is formed in a rectangular parallelepiped shape, and has a flange continuation surface 61, an upper surface 62, a lower surface 63, a facing surface 64, a first side surface 65, and a second side surface 66.

The flange continuation surface 61 is a flat surface continuous with an inner surface 18h of the flange portion 18b. The inner surface 18h of the flange portion 18b is a surface opposite to a surface facing the yoke cover 16 (see FIG. 3).

The upper surface 62 is a flat surface that is continuous and orthogonal to the flange continuation surface 61. The upper surface 62 is a surface farthest from the central axis AX as seen from the central axis AX (see FIG. 3) direction of the first coil bobbin 18 of the main body portion 60. The lower surface 63 is a flat surface that is continuous and orthogonal to the flange continuation surface 61. The lower surface 63 is a surface closest from the central axis AX as seen from the central axis AX (see FIG. 3) direction of the first coil bobbin 18 of the main body portion 60. That is, the lower surface 63 is a surface opposite to the upper surface 62. The two terminals 18f, 18g are rod-like members extending in a direction perpendicular to the upper surface 62, and are disposed in parallel to each other. In other words, both of the two terminals 18f, 18g project radially outward from an upper surface 62 of the first coil bobbin 18.

The facing surface 64 is a flat surface that is continuous and orthogonal to the upper surface 62 and the lower surface 63. The facing surface 64 is a surface opposite to the flange continuation surface 61. The first side surface 65 is a flat surface that is orthogonal to the flange continuation surface 61, the facing surface 64, the upper surface 62, and the lower surface 63 of the main body portion 60. The second side surface 66 is a flat surface that is orthogonal to the flange continuation surface 61, the facing surface 64, the upper surface 62, and the lower surface 63 of the main body portion 60. The second side surface 66 is a surface opposite to the first side surface 65.

In the present embodiment, as an example, there will be described a case where a right side surface of the main body portion 60 is the first side surface 65 in a state where the terminal attachment portion 18e is positioned at the upper end of the first coil bobbin 18 as the first coil bobbin 18 is seen from a flange continuation surface 61 side. Therefore, in the present embodiment, as an example, a case where the left side surface of the main body portion 60 is the second side surface 66 will be described.

The first projecting portion 70 is formed in a columnar shape having a rectangular cross section and projects from the first side surface 65. Specifically, the first projecting portion 70 projects in a direction orthogonal to the radial direction as seen from the central axis AX (see FIG. 3) direction. The cross-sectional area of the first projecting portion 70 is less than the surface area of the first side surface 65. The first projecting portion 70 has a first outer surface 70a, a first rear surface 70b, a first front surface 70c, and a first inner surface 70d.

The first outer surface 70a is a surface farthest from the central axis AX as seen from the central axis AX (see FIG. 3) of the first coil bobbin 18 among the surfaces constituting the first projecting portion 70. The first outer surface 70a is continuous with the upper surface 62.

The first rear surface 70b is a surface closest to the facing surface 64 as seen from the radial direction of the first coil bobbin 18 among the surfaces constituting the first projecting portion 70. The first rear surface 70b is disposed closer to the flange continuation surface 61 side than the terminal 18f as seen from the circumferential direction of the first coil bobbin 18. The first rear surface 70b is a surface parallel to the radial direction of the first coil bobbin 18.

The first front surface 70c is a surface closest to the flange continuation surface 61 as seen from the radial direction of the first coil bobbin 18 among the surfaces constituting the first projecting portion 70. The first front surface 70c is disposed on a facing surface 64 side while being spaced apart from the flange continuation surface 61 as seen from the circumferential direction.

The length of separating the first front surface 70c from the flange continuation surface 61 is set to a distance equal to or longer than the length of a first chamfered portion 91a described later along the central axis AX (see FIG. 3), for example, as seen from the circumferential direction of the first coil bobbin 18.

In addition, a second chamfered portion 72 is formed in the first projecting portion 70. The second chamfered portion 72 is formed in a shape chamfering (including R chamfering, C chamfering, and the like. The same applies to the following "chamfering") a portion where the first rear surface 70b and the first inner surface 70d are continuous.

It should be noted that in the present embodiment, as an example, a case where the second chamfered portion 72 is formed by R chamfering will be described. The radius of curvature of the second chamfered portion 72 formed by R chamfering is formed so as to be within the range of 100% to 500% with respect to the diameter of the conductive wire forming the first coil 13.

That is, the radius of curvature along the curved direction of the curved portion of the conductive wire forming the first coil 13 of the second chamfered portion 72 is within the range of 100% to 500% with respect to the diameter of the conductive wire forming the first coil 13. It should be noted that as an example, it is more preferable that the radius of curvature along the curved direction of the curved portion of the conductive wire forming the first coil 13 of the second chamfered portion 72 is within the range of 200% to 400% with respect to the diameter of the conductive wire forming the first coil 13.

The first inner surface 70d is a surface closest to the central axis AX as seen from the central axis AX direction of the first coil bobbin 18 among the surfaces constituting the first projecting portion 70. In addition, the first inner surface 70d is a surface orthogonal to the first rear surface 70b.

The second projecting portion 80 is formed in a columnar shape with a rectangular cross section and projects from the second side surface 66. Specifically, the second projecting portion 80 projects in a direction orthogonal to the radial direction of the first coil bobbin 18 as seen from the central axis AX direction. That is, both the first projecting portion 70 and the second projecting portion 80 project from the main body portion 60 in the circumferential direction of the first coil bobbin 18. The cross-sectional area of the second projecting portion 80 is wider than the cross-sectional area of the first projecting portion 70 and less than the surface area of the second side surface 66.

The second projecting portion 80 has a second outer surface 80a, a second rear surface 80b (see FIG. 6), and a second front surface 80c. The second outer surface 80a is a surface farthest from the central axis AX as seen from the central axis AX direction among the surfaces constituting the second projecting portion 80. The second outer surface 80a is continuous with the upper surface 62 similarly to the first outer surface 70a.

Furthermore, the second rear surface 80b is a surface closest to the facing surface 64 as seen from the radial direction of the first coil bobbin 18 among the surfaces constituting the second projecting portion 80. Similarly to the first rear surface 70b, the second rear surface 80b is disposed closer to the flange continuation surface 61 side than the terminal 18f as seen from the circumferential direction of the first coil bobbin 18. Similarly to the first rear surface 70b, the second rear surface 80b is a surface parallel to the radial direction of the first coil bobbin 18.

The second front surface 80c is a surface closest to the flange continuation surface 61 as seen from the radial direction of the first coil bobbin 18 among the surfaces constituting the second projecting portion 80. Similarly to the first front surface 70c, the second front surface 80c is disposed on the facing surface 64 side while being spaced apart from the flange continuation surface 61 as seen from the circumferential direction of the first coil bobbin 18. The length of separating the second front surface 80c from the flange continuation surface 61 is set to a distance equal to or longer than the length of a first chamfered portion 91b along the central axis AX of the first coil bobbin 18, for example, as seen from the circumferential direction of the first coil bobbin 18.

In addition, a third chamfered portion 82 is formed in the second projecting portion 80. The third chamfered portion 82 is formed in a shape in which a continuous portion of the second rear surface 80b and a second inner surface (not illustrated) is chamfered. The second inner surface is a surface closest to the central axis AX as seen from the central axis AX direction of the first coil bobbin 18 among the surfaces constituting the second projecting portion 80. In addition, the second inner surface is a surface orthogonal to the second rear surface 80b. It should be noted that in the present embodiment, as an example, a case where the third chamfered portion 82 is formed by R chamfering similarly to the second chamfered portion 72 will be described.

The radius of curvature of the third chamfered portion 82 formed by R chamfering is formed so as to be within the range of 100% to 500% with respect to the diameter of the conductive wire forming the first coil 13. That is, the radius of curvature of the third chamfered portion 82 is within the range of 100% to 500% with respect to the diameter of the conductive wire forming the first coil 13. It should be noted that as an example, it is more preferable that the radius of curvature of the third chamfered portion 82 is within the range of 200% to 400% with respect to the diameter of the conductive wire forming the first coil 13.

Further, first chamfered portions 91a, 91b and fourth chamfered portions 92a, 92b are formed in the terminal attachment portion 18e. The first chamfered portions 91a, 91b are formed in a shape obtained by chamfering the continuous portion of the flange continuation surface 61 and the first side surface 65 and the second side surface 66. It should be noted that in the present embodiment, as an example, a case where the first chamfered portions 91a, 91b are formed by C chamfering will be described. The fourth chamfered portions 92a, 92b are formed in a shape obtained by chamfering the continuous portion of the upper surface 62 and the first side surface 65 and the second side surface 66. It should be noted that in the present embodiment, as an example, a case where the fourth chamfered portions 92a, 92b are formed by C chamfering will be described.

The two terminals 18f, 18g are terminals for connecting the first coil 13 to the circuit board 20 (see FIG. 1). Furthermore, the two terminals 18f, 18g are press-fitted and fixed to the upper surface 62 of the terminal attachment portion 18e.

As illustrated in FIG. 6, the terminal 18f is disposed at a position apart from the first side surface 65 as seen from the radial direction of the first coil bobbin 18 on the upper surface 62. The length of separating the terminal 18f from the first side surface 65 is set to a distance not less than the length of the fourth chamfered portion 92a along the circumferential direction of the first coil bobbin 18, for example.

The terminal 18g is disposed at a position apart from the second side surface 66 as seen from the radial direction of the first coil bobbin 18 in the upper surface 62. The length of separating the terminal 18g from the second side surface 66 is set to a distance not less than the length of the fourth chamfered portion 92b along the circumferential direction of the first coil bobbin 18, for example.

As described above, the first chamfered portions 91a, 91b, the second chamfered portion 72, the third chamfered portion 82, and the fourth chamfered portions 92a, 92b are provided in the terminal attachment portion 18e. Therefore, the curved portion of the conductive wire forming the first coil 13 comes into contact with the first coil bobbin 18 via the plurality of chamfered portions on a winding path.

Here, the "winding path" is a path from the one terminal 18f to the other terminal 18g via a groove portion between the flange portions 18a, 18b of the first coil bobbin 18.

Therefore, in the first embodiment, it is possible to reduce the bending stress generated in the conductive wire forming the first coil 13 on the winding path. This makes it possible to suppress the damage of the conductive wire forming the first coil 13.

In addition, since it is possible to increase the tension of the conductive wire forming the first coil 13, a gap formed between the conductive wire forming the first coil 13 and the terminal attachment portion 18e on the winding path can be reduced. This makes it possible to improve the working accuracy of wiring the conductive wire forming the first coil 13.

### (Detailed Configuration of First Yoke 15 and Second Yoke 17)

Next, with reference to FIG. 3, the detailed configuration of the first yoke 15 and the second yoke 17 will be described. The first yoke 15 and the second yoke 17 are members having the same shape. Both of the first yoke 15 and the second yoke 17 have cylindrical portions 15a, 17a and bottom portions 15b, 17b.

The cylindrical portions 15a, 17a are formed in a cylindrical shape and are portions where the first coil bobbin 18 and the second coil bobbin 19 are externally fitted, respectively. Accommodating portions 15c, 17c are formed in a shape in which parts of the cylindrical portions 15a, 17a are cut out. The accommodating portions 15c, 17c are portions that accommodate the pressing portions 18c, 19c and the terminal attachment portions 18e, 19e, inside the central axis AX direction.

The bottom portions 15b, 17b are formed in an annular shape and are continuous with the end portion of the cylindrical portions 15a, 17a on the side opposite to the end portion where the accommodating portions 15c, 17c are formed. The inner diameter of the bottom portions 15b, 17b is the same as the inner diameter of the groove portion between the flange portions 18a, 18b and the inner diameter of the groove portion between the flange portions 19a, 19b.

Three recessed portions 15d, 17d are formed in the end portions of the cylindrical portions 15a, 17a, respectively, where the accommodating portions 15c, 17c are formed. The three recessed portions 15d, 17d are provided so as to be separated from each other by a predetermined angle in the circumferential direction of the first yoke 15 and the second yoke 17. In the example illustrated in FIG. 3, the three recessed portions 15d, 17d are spaced apart at equal intervals along the circumferential direction of the first yoke 15 and the second yoke 17. It should be noted that the recessed portions 15d, 17d are not necessarily formed at equal intervals in the circumferential direction of the first yoke 15 and the second yoke 17 but may be formed at different intervals. Further, the number of the recessed portions 15d, 17d to be installed and an angle at which the recessed portions 15d, 17d are installed can be appropriately set.

### (Detailed Configuration of Yoke Cover 16)

Next, with reference to FIGS. 3 and 4, the detailed configuration of the yoke cover 16 will be described. As illustrated in FIG. 3, the yoke cover 16 is a substantially ring-shaped member. The yoke cover 16 includes a ring portion 16b and three protruding portions 16a. The three protruding portions 16a are disposed so as to be separated from each other by a predetermined angle along the circumferential direction of the yoke cover 16 on the outer peripheral surface of the ring portion 16b formed in a substantially ring shape. The number of the protruding portions 16a to be installed and an angle at which the protruding portions 16a are installed can be appropriately set.

Furthermore, when assembling the torque detection unit 10, the yoke cover 16 is press-fitted into the inner diameters of the cylindrical portions 15a, 17a of the first yoke 15 and the second yoke 17 in a state where the protruding portions 16a are fitted in the respective recessed portions 15d, 17d. Therefore, the yoke cover 16 is press-fitted to the inner diameter of the cylindrical portion of the two electromagnetic yokes at a position sandwiched between two electromagnetic yokes (the first yoke 15 and the second yoke 17) facing each other in the axial direction.

### (Second emobidiment, forming part of the present invention)

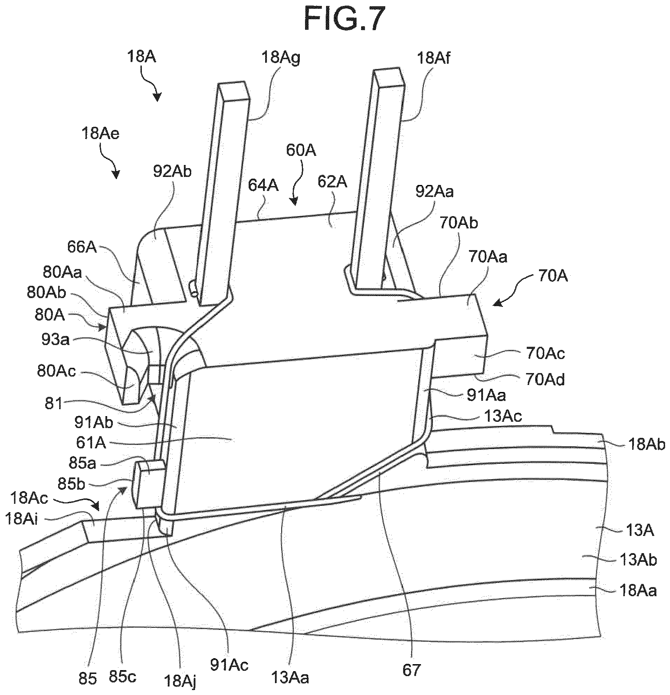

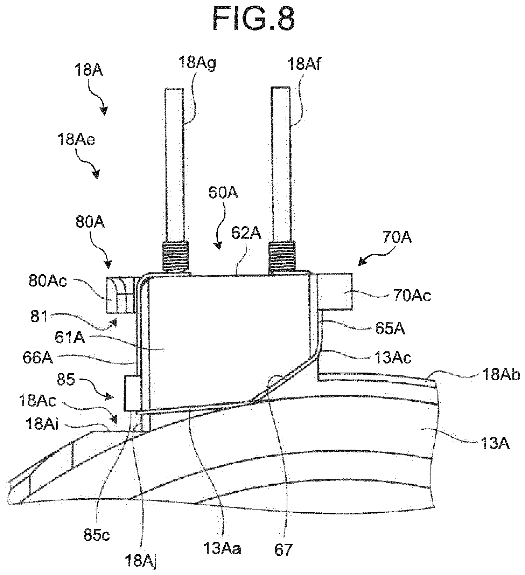

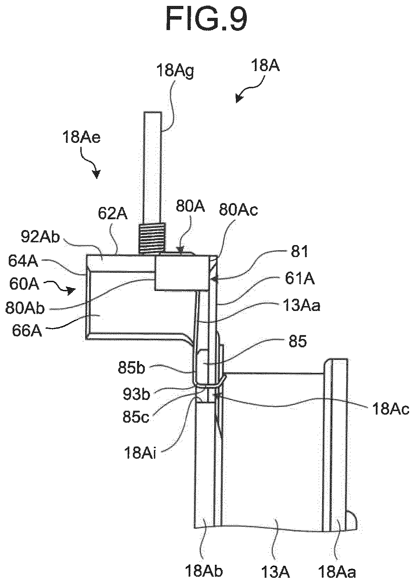

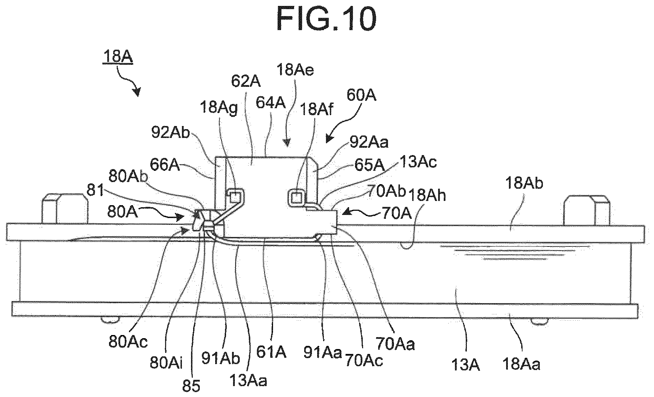

FIG. 7 is a perspective view of a coil bobbin with a coil according to a second embodiment. FIG. 8 is a front view of the coil bobbin according to the second embodiment. FIG. 9 is a side view of the coil bobbin according to the second embodiment. FIG. 10 is a top view of the coil bobbin according to the second embodiment.

In the first embodiment, as illustrated in FIG. 5, a lead portion 13a of the conductive wire forming the first coil 13 comes in contact with the second side surface 66 away from the portion wound around the first coil bobbin 18 in the radial direction. Here, an imaginary line that intersects a portion where the first side surface 65 and the outer periphery of the flange portion 18b are in contact with each other, and is parallel to an extending direction of the terminals 18f, 18g is defined as a first reference line AX1. An imaginary line orthogonal to the first reference line AX1 and coming in contact with the outer periphery of the flange portion 18b is defined as a second reference line AX2. At this time, the lead portion 13a comes in contact with the second side surface 66 on the outer side in the radial direction than the second reference line AX2. Therefore, there is a possibility that the inclination of the lead portion 13a increases with respect to the circumferential direction of the first coil 13, and the flow of the magnetic flux of the first coil 13 is hindered.

Furthermore, the lead portion 13a passes through a second rear surface 80b (see FIG. 6) side of the second projecting portion 80 and is connected to the terminal 18g. Therefore, there is a possibility that the conductive wire may be damaged when assembling the first coil bobbin 18 and the second coil bobbin 19 and the first yoke 15 and the second yoke 17 or when incorporating the torque detection unit 10 into the housing 5 (see FIG. 1).

As illustrated in FIG. 7, in the second embodiment, a first coil bobbin 18A has a pair of flange portions 18Aa, 18Ab, a terminal attachment portion 18Ae, and two terminals 18Af, 18Ag. In FIGS. 7 to 10, the configuration of the first coil bobbin 18A will be described, but a second coil bobbin 19A has the same configuration, and a detailed description thereof will be omitted. As in the first embodiment, two pressing portions (not illustrated in FIGS. 7 to 10) are provided in the first coil bobbin 18A.

As illustrated in FIG. 7, the terminal attachment portion 18Ae farther projects outward in the radial direction of the first coil bobbin 18A from the upper end of the outer peripheral surface of the flange portion 18Ab. The terminal attachment portion 18Ae includes a main body portion 60A, a first projecting portion 85, a second projecting portion 80A, and a third projecting portion 70A. The main body portion 60A is formed in a rectangular parallelepiped shape and has a flange continuation surface 61A, an upper surface 62A, a lower surface 63A, a facing surface 64A, a first side surface 65A, and a second side surface 66A. The main body portion 60A has the same configuration as the main body portion 60 of the first embodiment, and a detailed description of each portion is omitted.

A first coil 13A is wound around a groove portion between the flange portions 18Aa, 18Ab of the first coil bobbin 18A. The first coil 13A includes a winding portion 13Ab around which the conductive wire is wound, and lead portions 13Aa, 13Ac. As illustrated in FIG. 8, as seen from a direction along the central axis AX, the lead portion 13Aa is provided in a direction away from a winding portion 13b radially outwardly and toward the second side surface 66A from the first side surface 65A, and comes in contact with the second side surface 66A.

As illustrated in FIGS. 7 and 8, an inclined portion 67 is provided on the inner wall of the flange portion 18Ab. The inclined portion 67 is inclined toward the first side surface 65A as seen from the central axis AX direction. The lead portion 13Ac is disposed along the inclined portion 67, is in contact with the first side surface 65A, and is connected to the terminal 18Af through a third rear surface 70Ab side of the third projecting portion 70A. It should be noted that the present invention is not limited to this, and the inclined portion 67 may not be provided.

The third projecting portion 70A is formed in a columnar shape having a rectangular cross section and projects from the first side surface 65A. Specifically, the third projecting portion 70A protrudes in a direction orthogonal to the radial direction of the first coil bobbin 18A as seen from the central axis AX direction. The cross-sectional area of the third projecting portion 70A is less than the surface area of the first side surface 65A. The third projecting portion 70A has a third outer surface 70Aa, a third rear surface 70Ab, a third front surface 70Ac, and a third inner surface 70Ad. The configuration of the third projecting portion 70A is the same as that of the above-described first projecting portion 70 of the first embodiment, and a detailed description of each portion is omitted.

The first projecting portion 85 and the second projecting portion 80A project from the second side surface 66A of the main body portion 60A. Each of the first projecting portion 85 and the second projecting portion 80A projects in a direction orthogonal to the radial direction of the first coil bobbin 18A as seen from the central axis AX direction. In addition, the first projecting portion 85 and the second projecting portion 80A are disposed so as to be spaced apart from each other in the radial direction. The second projecting portion 80A is disposed radially outward of the first projecting portion 85. The first projecting portion 85 and the second projecting portion 80A are formed in a columnar shape having a rectangular cross section. As illustrated in FIG. 9, the first projecting portion 85 has a smaller cross-sectional shape than the second projecting portion 80A.

The first projecting portion 85 has a first front surface 85a, a first rear surface 85b, and a first inner surface 85c. As illustrated in FIG. 9, as seen from the circumferential direction of the first coil bobbin 18A, the first front surface 85a is disposed on the facing surface 64A side while being spaced apart from the flange continuation surface 61A. As seen from the circumferential direction of the first coil bobbin 18A, the first rear surface 85b is provided at a position closer to the flange continuation surface 61A than a second rear surface 80Ab of the terminal 18Ag and the second projecting portion 80A. The first inner surface 85c is a surface which is also closest to the central axis AX as seen from the central axis AX direction among the surfaces constituting the first projecting portion 85. In addition, the first inner surface 85c is a surface orthogonal to the first rear surface 85b.

As illustrated in FIGS. 7 and 8, in the flange portion 18Ab, a cutout portion 18Ac is formed in a portion where the second side surface 66A and the outer periphery of the flange portion 18Ab are in contact with each other. The cutout portion 18Ac is recessed radially inward from the outer periphery of the flange portion 18Ab. The cutout portion 18Ac includes a first surface 18Ai and a second surface 18Aj. The first surface 18Ai is formed parallel to the first inner surface 85c. The second surface 18Aj is a surface connected to the first surface 18Ai and parallel to the second side surface 66A.

The second projecting portion 80A has a second outer surface 80Aa, a second rear surface 80Ab, and a second front surface 80Ac. The second outer surface 80Aa is a surface farthest from the central axis AX as seen from the central axis AX direction among the surfaces constituting the second projecting portion 80A. The second outer surface 80Aa is continuous with the upper surface 62A similarly to the third outer surface 70Aa.

As illustrated in FIG. 9, the second rear surface 80Ab is a surface closest to the facing surface 64A as seen from the circumferential direction of the first coil bobbin 18A among the surfaces constituting the second projecting portion 80A. The second rear surface 80Ab is disposed at a position overlapping with the terminal 18Ag as seen from the circumferential direction of the first coil bobbin 18A. Furthermore, similarly to the first rear surface 85b, the second rear surface 80Ab is a surface parallel to the radial direction of the first coil bobbin 18A.

The second front surface 80Ac is a surface closest to the flange continuation surface 61A as seen from the circumferential direction of the first coil bobbin 18A among the surfaces constituting the second projecting portion 80A. As seen from the circumferential direction of the first coil bobbin 18A, similarly to the first front surface 85a, the second front surface 80Ac is disposed on the facing surface 64A side while being spaced apart from the flange continuation surface 61A. The length of separating the second front surface 80Ac from the flange continuation surface 61A is set to a distance equal to or' longer than the length of a first chamfered portion 91Ab along the central axis AX, for example, as seen from the circumferential direction of the first coil bobbin 18A.

As illustrated in FIGS. 7 and 10, the second front surface 80Ac is provided with a recessed portion 81 recessed in a direction along the central axis AX. That is, the recessed portion 81 is recessed from the second front surface 80Ac to the second rear surface 80Ab. The recessed portion 81 is provided in a groove shape along the radial direction of the first coil bobbin 18A. As illustrated in FIG. 10, as seen from the radial direction of the first coil bobbin 18A, the recessed portion 81, the first projecting portion 85, and the cutout portion 18Ac are provided at positions overlapping each other. In addition, the recessed portion 81 has a curved shape. As illustrated in FIG. 10, the recessed portion 81 has a curved shape that is recessed in the central axis AX direction as seen from the radial direction. Further, as illustrated in FIG. 7, a chamfered portion 93a is formed at a position where the second outer surface 80Aa and the inner wall of the recessed portion 81 are connected. As a result, the recessed portion 81 has a curved shape in which an inclination angle with respect to the second outer surface 80Aa gradually changes.

In the present embodiment, as illustrated in FIG. 7, a chamfered portion 91Ac is provided at a connection portion between the flange continuation surface 61A and the second surface 18Aj of the cutout portion 18Ac. Further, as illustrated in FIG. 9, a chamfered portion 93b is provided at a connection portion between the first rear surface 85b of the first projecting portion 85 and the first inner surface 85c. Similarly to the first embodiment, the main body portion 60A also has first chamfered portions 91Aa, 91Ab and fourth chamfered portions 92Aa, 92Ab.

With such a configuration, as seen from the central axis AX direction of the first coil bobbin 18A, the lead portion 13Aa is separated radially outward from the winding portion 13Ab between the first side surface 65A and the second side surface 66A. The lead portion 13Aa comes in contact with the second side surface 66A between the first projecting portion 85 and the flange portion 18Ab. Specifically, the lead portion 13Aa comes in contact with the second surface 18Aj of the cutout portion 18Ac. As illustrated in FIG. 9, the lead portion 13Aa is in contact with the first inner surface 85c and the first rear surface 85b of the first projecting portion 85 and is connected to the terminal 18Ag through the recessed portion 81 of the second projecting portion 80A.

Also in the present embodiment, the chamfered portions 91Ac, 93b, 93a are provided in a winding path of the lead portion 13Aa. Thus, it is possible to suppress the damage of the lead portion 13Aa.

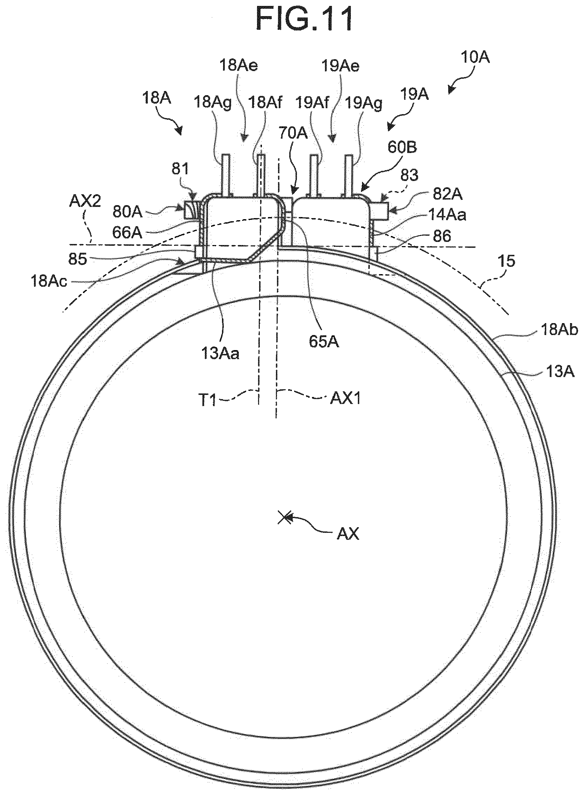

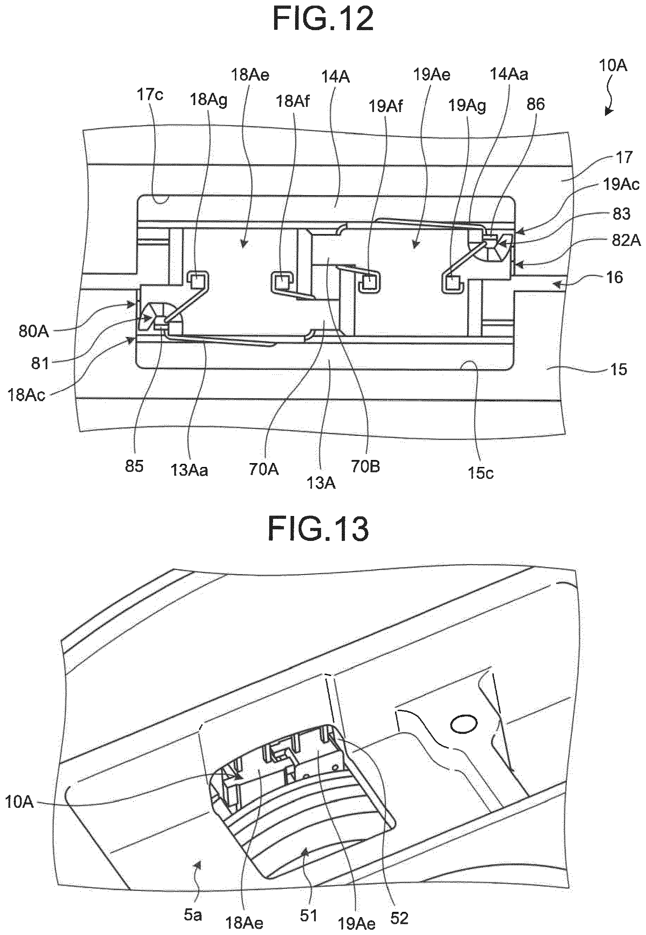

FIG. 11 is a front view when a pair of coil bobbins according to the second embodiment is assembled. FIG. 12 is a top view of a torque detection unit according to the second embodiment. In FIG. 11, a part of the first yoke 15 is indicated by a two-dot chain line. As illustrated in FIG. 11, when the first coil bobbin 18A and the second coil bobbin 19A are assembled, the terminal attachment portion 18Ae and a terminal attachment portion 19Ae are disposed adjacent to each other in the circumferential direction. As illustrated in FIG. 12, the third projecting portion 70A of the terminal attachment portion 18Ae and a third projecting portion 70B of the terminal attachment portion 19Ae are disposed adjacent to each other in the central axis AX direction. The third projecting portion 70A comes in contact with the terminal attachment portion 19Ae, and the third projecting portion 70B is in contact with the terminal attachment portion 18Ae. Thereby, a position in the circumferential direction between the terminal attachment portion 18Ae and the terminal attachment portion 19Ae is regulated.

It should be noted that in this embodiment, the second coil bobbin 19A has the same configuration as the first coil bobbin 18A. The second coil bobbin 19A also has a first projecting portion 86 and a second projecting portion 82A. A lead portion 14Aa is connected to a terminal 19Ag through a recessed portion 83 provided in the second projecting portion 82A. Other configurations are the same as those of the first coil bobbin 18A, and a detailed description of the second coil bobbin 19A is omitted.

As illustrated in FIG. 11, a straight line parallel to the extending direction of the terminal 18Af is taken as an imaginary line T1. Here, an imaginary line that intersects a portion where the first side surface 65A and the outer periphery of the flange portion 18Ab are in contact with each other, and is parallel to the imaginary line T1 is defined as a first reference line AX1. An imaginary line orthogonal to the first reference line AX1 and coming in contact with the outer periphery of the flange portion 18Ab is defined as a second reference line AX2. The first projecting portion 85 and the cutout portion 18Ac are provided in the first coil bobbin 18A. Therefore, the lead portion 13Aa passes through the inner side in the radial direction from the second reference line AX2 and comes in contact with the second side surface 66A. This makes it possible to reduce an angle between the direction of the conductive wire constituting the first coil 13A and the lead portion 13Aa. Therefore, the lead portion 13Aa suppresses hindering of the flow of the magnetic flux of the first coil 13A.

As illustrated in FIG. 12, the accommodating portion 15c of the first yoke 15 and the accommodating portion 17c of the second yoke 17 are disposed to face each other. The terminal attachment portion 18Ae and the terminal attachment portion 19Ae are disposed in the space formed by the accommodating portion 15c and the accommodating portion 17c.

In the present embodiment, as illustrated in FIG. 11, the lead portion 13Aa passes through the inner side in the radial direction from the second reference line AX2 and comes in contact with the second side surface 66A. Therefore, it is possible to prevent the lead portion 13Aa from being damaged by coming into contact with the first yoke 15 and the second yoke 17 when the first coil bobbin 18A and the second coil bobbin 19A and the first yoke 15 and the second yoke 17 are assembled.

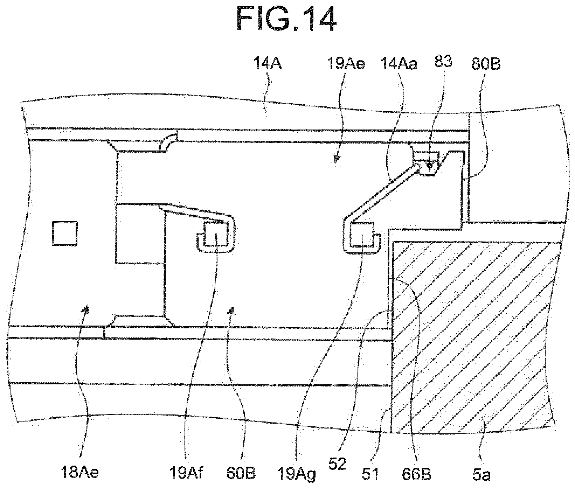

FIG. 13 is a perspective view when the torque detection unit according to the second embodiment is incorporated in a housing. FIG. 14 is a top view for explaining a relationship between the torque detection unit and the housing according to the second embodiment.

As illustrated in FIG. 13, an opening 51 is provided in the first housing 5a. Parts of the terminal attachment portion 18Ae and the terminal attachment portion 19Ae of a torque detection portion 10A are disposed inside the opening 51.

As illustrated in FIG. 14, a second side surface 66B of the terminal attachment portion 19Ae may come into contact with an inner wall 52 of the opening 51 when assembling the torque detection portion 10A and the first housing 5a. The lead portion 14Aa is connected to the terminal 19Ag through the recessed portion 83 of the second projecting portion 80B. That is, the lead portion 14Aa is connected to the terminal 19Ag via the opposite side of the first housing 5a with respect to the second projecting portion 80B. Therefore, it is possible to prevent the lead portion 14Aa from being damaged by coming into contact with the first housing 5a. In FIG. 14, the second coil bobbin 19A has been described. However, in the first coil bobbin 18A, similarly, it is possible to prevent the lead portion 13Aa from being damaged by coming into contact with the first housing 5a.

As explained above, the coil bobbin (first coil bobbin 18A) of the present embodiment includes a coil (first coil 13A), a pair of flange portions 18Aa, 18Ab sandwiching the first coil 13A, a terminal attachment portion 18Ae provided so as to protrude outward in the radial direction of the first coil 13A from one flange portion 18Ab and having the first side surface 65A and the second side surface 66A which are faced to each other in the circumferential direction, and terminals 18Ag, 18Af provided on the upper surface 62A of the terminal attachment portion 18Ae and extending in a direction perpendicular to the upper surface 62A. The first coil 13A includes the winding portion 13Ab around which a conductive wire is wound, and the lead portion 13Aa which is, as seen from a direction along the central axis AX of the first coil 13A, provided in a direction away from the winding portion 13Ab radially outwardly and toward the second side surface 66A from the first side surface 65A, and comes in contact with the second side surface 66A. When an imaginary line that intersects a portion where the first side surface 65A and the outer periphery of the flange portion 18Ab are in contact with each other, and is parallel to the extending direction of the terminal 18Af is defined as a first reference line AX1, and an imaginary line orthogonal to the first reference line AX1 and coming in contact with the outer periphery of the flange portion 18Ab is a second reference line AX2, the lead portion 13Aa is provided along the second reference line AX2 or is provided on a first coil 13A side with respect to the second reference line AX2.

This makes it possible to reduce an angle between the direction of the conductive wire constituting the first coil 13A and the lead portion 13Aa. Therefore, it is suppressed that the magnetic flux of the first coil 13A by the lead portion 13Aa is inhibited. Further, when assembling the first coil bobbin 18A with the first yoke 15 and the second yoke 17 or assembling the torque detection portion 10A with the first housing 5a, it is possible to prevent the lead portion 13Aa from being damaged by coming into contact with an external member.

In the coil bobbin (first coil bobbin 18A) of the present embodiment, the first projecting portion 85 projecting in the circumferential direction is provided on the second side surface 66A, and at a portion where the outer periphery of the flange portion 18Ab and the second side surface 66A are in contact with each other, the cutout portion 18Ac that is recessed radially inward from the outer periphery of the flange portion 18Ab is provided. As a result, the lead portion 13Aa comes in contact with the second side surface 66A between the first projecting portion 85 and the cutout portion 18Ac. Therefore, the lead portion 13Aa passes through the inner side in the radial direction from the second reference line AX2 and comes in contact with the second side surface 66A.

In the coil bobbin (first coil bobbin 18A) of the present embodiment, the second projecting portion 80A projecting in the circumferential direction is provided on the second side surface 66A on the radially outer side of the first projecting portion 85. The lead portion 13Aa is connected to the terminal 18Ag from between the first projecting portion 85 and the cutout portion 18Ac through the rear surface of the first projecting portion 85 and the second front surface 80Ac of the second projecting portion 80A.

In the coil bobbin (first coil bobbin 18A) of the present embodiment, the second front surface 80Ac of the second projecting portion 80A is provided with the recessed portion 81 recessed in the direction along the central axis AX of the first coil 13A. According to this, the lead portion 13Aa is connected to the terminal 18Ag through the recessed portion 81. Therefore, it is possible to prevent the lead portion 13Aa from being damaged by coming into contact with an external member.

The configurations of the first coil bobbin 18, 18A and the second coil bobbin 19, 19A described above may be appropriately changed. For example, the shapes of the first coil bobbins 18, 18A and the second coil bobbins 19, 19A may be different from each other. Further, the position at which each chamfered portion is formed may be changed as appropriate, and a configuration in which a part of each chamfered portion is not formed may be adopted.

### Reference Signs List

- 3: ELECTRIC POWER STEERING APPARATUS
- 5: HOUSING
- 10, 10A: TORQUE DETECTION UNIT
- 15: FIRST YOKE
- 16: YOKE COVER
- 17: SECOND YOKE
- 18, 18A: FIRST COIL BOBBIN
- 18a, 18b, 19a, 19b: FLANGE PORTION
- 18e, 19e: TERMINAL ATTACHMENT PORTION
- 18f, 18g, 19f, 19g: TERMINAL
- 18Ac: CUTOUT PORTION
- 19, 19A: SECOND COIL BOBBIN
- 60, 60A: MAIN BODY PORTION
- 61, 61A: FLANGE CONTINUATION SURFACE
- 70: FIRST PROJECTING PORTION
- 70A: THIRD PROJECTING PORTION
- 80, 80A: SECOND PROJECTING PORTION
- 81: RECESSED PORTION
- 85: FIRST PROJECTING PORTION
- TS: TORQUE DETECTION DEVICE

## Claims

1. A coil bobbin (18A;19A) with a coil (13A;14A) comprising:
a pair of flange portions (18Aa, 18Ab; 19Aa, 19Ab) sandwiching the coil (13A; 14A);
a terminal attachment portion (18Ae; 19Ae) which is provided so as to protrude outward in a radial direction of the coil (13A;14A) from one of the flange portions (18Aa, 18Ab; 19Aa, 19Ab) and has a first side surface (65A) and a second side surface (66A) which are faced to each other in a circumferential direction; and
a terminal (18Af; 18Ag; 19Af; 19Ag) provided on an upper surface (62A) of the terminal attachment portion (18Ae; 19Ae) and extending in a direction perpendicular to the upper surface (62A), wherein
the coil (13A; 14A) includes a winding portion (13Ab) formed by winding a conductive wire around the coil bobbin (18A; 19A), and a lead portion (13Aa; 14Aa) which is provided in a direction away from the winding portion (13Ab) radially outwardly and toward the second side surface (66A) from the first side surface (65A), and comes in contact with the second side surface (66A) as seen from a direction along a central axis (AX) of the coil (13A; 14A),
when one imaginary line that intersects a portion where the first side surface (65A) and the outer periphery of the one of the flange portions (18Aa, 18Ab; 19Aa, 19Ab) come in contact with each other, and is parallel to the extending direction of the terminal (18Af; 18Ag; 19Af; 19Ag) is defined as a first reference line (AX1), and another imaginary line orthogonal to the first reference line (AX1) and coming in contact with the outer periphery of the one of the flange portions (18Aa,18Ab; 19Aa,19Ab) is defined as a second reference line (AX2),
the lead portion (13Aa; 14Aa) is provided along the second reference line (AX2) or is provided at a position closer to the winding portion (13Ab) than the second reference line (AX2),
a first projecting portion (85; 86) projecting in the circumferential direction is provided on the second side surface (66A),
a second projecting portion (80A; 82A) protruding in the circumferential direction is provided on the second side surface (66A) at a radially outer side of the first projecting portion (85; 86),
at a portion where an outer periphery of the one of the flange portions (18Aa,18Ab; 19Aa, 19Ab) and the second side surface (66A) come in contact with each other, a cutout portion (18Ac; 19Ac) that is recessed radially inward from the outer periphery of the one of the flange portions (18Aa, 18Ab; 19Aa, 19Ab) is provided, wherein
the lead portion (13Aa; 14Aa) is connected to the terminal (18Ag; 19Ag) from between the first projecting portion (85; 86) and the cutout portion (18Ac; 19Ac) along rear surface of the first projecting portion (85; 86) and a front surface of the second projecting portion (80A; 82A), wherein a recessed portion (81; 83) recessed in a direction along the central axis (AX) of the coil (13A; 14A) is provided on the front face of the second projecting portion (80A; 82A).

2. The coil bobbin (18A;19A) with a coil (13A; 14A) according to claim 1, wherein
the lead portion (13Aa; 14Aa) comes in contact with the second side surface (66A) between the first projecting portion (85; 86) and the cutout portion (18Ac; 19Ac).

3. The coil bobbin (18A; 19A) with a coil (13A;14A) according to claim 1 or 2, wherein said lead portion (13Aa; 14Aa) and another lead portion (13Ac) of the coil (13A; 14A) are attached to the terminal attachment portion (18Ae; 19Ae).

4. A torque detection device (10A) comprising:
the coil bobbin (18A; 19A) with a coil (13A; 14A) according to any one of claims 1 to 3, the coil (13A; 14A) varying in impedance according to a torque generated on a rotating shaft (11) of the torque detection device;
a yoke (15; 17) having a cylindrical portion (15a; 17a) that internally fits and holds the coil bobbin (18A;19A);
a yoke cover (16) press-fitted to an inner diameter of the cylindrical portion (15a; 17a); and
the terminal attachment portion (18Ae;19Ae) which is provided so as to protrude outward in a radial direction of the coil bobbin (18A;19A) from the one of the flange portions (18Aa,18Ab; 19Aa,19Ab) of the coil bobbin (18A;19A) and to attach both ends of the coil (13 A; 14A), wherein
a chamfered portion (91Aa;91Ab;91Ac;92Aa;92Ab;93a;93b) is formed in at least a part of a portion of the terminal attachment portion (18Ae; 19Ae) facing a curved portion of a conductive wire constituting the coil (13A; 14A).

## Patentansprüche

1. Spulenkörper (18A; 19A) mit einer Spule (13A; 14A), der umfasst:
ein Paar Flanschabschnitte (18Aa, 18Ab; 19Aa, 19Ab), in welche die Spule (13A; 14A) eingebracht ist;
einen Anschlussbefestigungsabschnitt (18Ae; 19Ae), der so vorgesehen ist, dass er in radialer Richtung der Spule (13A; 14A) aus einem der Flanschabschnitte (18Aa, 18Ab; 19Aa, 19Ab) herausragt und eine erste Seitenfläche (65A) und eine zweite Seitenfläche (66A) aufweist, die in Umfangsrichtung einander zugewandt sind; und
einen Anschluss (18Af; 18Ag; 19Af; 19Ag), der auf einer oberen Oberfläche (62A) des Anschlussbefestigungsabschnitts (18Ae; 19Ae) vorgesehen ist und sich in einer Richtung senkrecht zur oberen Oberfläche (62A) erstreckt, wobei
die Spule (13A; 14A) einen Wicklungsabschnitt (13Ab) umfasst, der durch Wickeln eines leitenden Drahtes um den Spulenkörper (18A; 19A) gebildet wird, und einen Leitabschnitt (13Aa; 14Aa), der radial nach außen in einer Richtung von dem Wicklungsabschnitt(13Ab) weg und von der ersten Seitenfläche (65A) hin zur zweiten Seitenfläche (66A) vorgesehen ist, und mit der zweiten Seitenfläche (66A) in Kontakt kommt, gesehen aus einer Richtung entlang einer Mittelachse (AX) der Spule (13A; 14A),
wenn eine imaginäre Linie, die einen Abschnitt schneidet, wo die erste Seitenfläche (65A) und der Außenumfang des einen der Flanschabschnitte (18Aa, 18Ab; 19Aa, 19Ab) miteinander in Kontakt kommen, und die parallel zur Ausdehnungsrichtung des Anschlusses (18Af; 18Ag; 19Af; 19Ag) verläuft, als eine erste Referenzlinie (AX1) definiert wird, und eine andere imaginäre Linie, die orthogonal zur ersten Referenzlinie (AX1) ist und mit dem Außenumfang des einen der Flanschabschnitte (18Aa, 18Ab; 19Aa, 19Ab) in Kontakt kommt als zweite Referenzlinie (AX2) definiert wird,
der Leitabschnitt (13Aa; 14Aa) entlang der zweiten Referenzlinie (AX2) vorgesehen oder an einer Position vorgesehen ist, die näher am Wicklungsabschnitt (13Ab) liegt als die zweite Referenzleitung (AX2);
ein erster vorstehender Abschnitt (85; 86), der in Umfangsrichtung vorsteht, an der zweiten Seitenfläche (66A) vorgesehen ist,
ein zweiter vorstehender Abschnitt (80A; 82A), der in Umfangsrichtung vorsteht, an der zweiten Seitenfläche (66A) an einer radial äußeren Seite des ersten vorspringenden Abschnitts (85; 86) vorgesehen ist,
an einem Abschnitt, an dem ein Außenumfang des einen der Flanschabschnitte (18Aa, 18Ab; 19Aa, 19Ab) und die zweiten Seitenfläche (66A) miteinander in Kontakt kommen, ein ausgeschnittener Abschnitt (18Ac; 19Ac) vorgesehen ist, der vom äußeren Umfang des einen der Flanschabschnitte (18Aa, 18Ab; 19Aa, 19Ab) radial nach innen vertieft ist,
wobei
der Leitabschnitt (13Aa; 14Aa) von zwischen dem ersten vorspringenden Abschnitt (85; 86) und dem ausgeschnittenen Abschnitt (18Ac) entlang einer hinteren Oberfläche des ersten vorstehenden Abschnitts (85; 86) und einer vorderen Oberfläche des zweiten vorstehenden Abschnitts (80A) mit dem Anschluss (18Ag; 19Ag) verbunden ist,
wobei auf der Vorderseite des zweiten vorstehenden Abschnitts (80A; 82A) ein vertiefter Abschnitt (81; 83) vorgesehen ist, der in einer Richtung entlang der Mittelachse (AX) der Spule (13A; 14A) vertieft ist.

2. Spulenkörper (18A; 19A) mit einer Spule (13A; 14A) nach Anspruch 1, bei dem
der Leitabschnitt (13Aa; 14Aa) mit der zweiten Seitenfläche (66A) zwischen dem ersten vorspringenden Abschnitt (85; 86) und dem ausgeschnittenen Abschnitt (18Ac; 19Ac) in Kontakt kommt.

3. Spulenkörper (18A; 19A) mit einer Spule (13A; 14A) nach Anspruch 1 oder 2, bei dem
der Leitabschnitt (13Aa; 14Aa) und ein anderer Leitabschnitt (13Ac) der Spule an dem Endbefestigungsabschnitt (18Ae; 19Ae) angebracht sind.

4. Drehmomenterfassungsvorrichtung (10A), die umfasst:
den Spulenkörper (18A; 19A) mit einer Spule (13A; 14A) nach einem der Ansprüche 1 bis 3, wobei die Impedanz der Spule (13A; 14A) gemäß einem auf einer rotierenden Welle (11) der Drehmomenterfassungseinrichtung erzeugten Drehmoment variiert;
ein Joch (15; 17) mit einem zylindrischen Abschnitt (15a; 17a), der innen in den Spulenkörper (18A; 19A) passt und diesen hält;
eine Jochabdeckung (16), die an einem Innendurchmesser des zylindrischen Abschnitts (15a; 17a) eingepresst ist; und
den Anschlussbefestigungsabschnitt (18Ae; 19Ae), der so vorgesehen ist, dass er in radialer Richtung des Spulenkörpers (18A; 19A) aus dem einen der Flanschabschnitte (18Aa, 18Ab; 19Aa, 19Ab) des Spulenkörpers (18A; 19A) herausragt und beide Enden der Spule (13A; 14A) befestigt, wobei
ein abgeschrägter Abschnitt (91Aa; 91Ab; 91Ac; 92Aa; 92Ab; 93a; 93b) in mindestens einem Teil eines Abschnitts des Anschlussbefestigungsabschnitts (18Ae; 19Ae) ausgebildet ist, der einem gekrümmten Abschnitt eines leitenden Drahtes zugewandt ist, der die Spule (13A; 14A) ausbildet.

## Revendications

1. Corps de bobine (18A ; 19A) avec bobine (13A ; 14A), comprenant :
une paire de portions de bride (18Aa, 18Ab ; 19Aa, 19Ab) prenant en sandwich la bobine (13A ; 14A) ;
une portion d'attache de borne (18Ae ; 19Ae) qui est prévue afin de faire saillie vers l'extérieur dans une direction radiale de la bobine (13A ; 14A) à partir d'une des portions de bride (18Aa, 18Ab ; 19Aa, 19Ab) et a une première surface latérale (65A) et une seconde surface latérale (66A) qui sont en face l'une de l'autre dans une direction circonférentielle ; et
une borne (18Af ; 18Ag ; 19Af ; 19Ag) prévue sur une surface supérieure (62A) de la portion d'attache de borne (18Ae ; 19Ae) et s'étendant dans une direction perpendiculaire à la surface supérieure (62A), dans lequel
la bobine (13A ; 14A) inclut une portion d'enroulement (13Ab) formée en enroulant un fil métallique conducteur autour du corps de bobine (18A ; 19A), et une portion de fil (13Aa ; 14Aa) qui est prévue dans une direction à l'opposé de la portion d'enroulement (13Ab) radialement vers l'extérieur et vers la seconde surface latérale (66A) à partir de la première surface latérale (65A), et entre en contact avec la seconde surface latérale (66A) en vue à partir d'une direction le long d'un axe central (AX) de la bobine (13A ; 14A),
lorsqu'une ligne imaginaire qui intersecte une portion où la première surface latérale (65A) et la périphérie extérieure de l'une des portions de bride (18Aa, 18Ab ; 19Aa, 19Ab) entrent en contact l'une avec l'autre, et est parallèle à la direction d'extension de la borne (18Af ; 18Ag ; 19Af ; 19Ag) est définie en tant que première ligne de référence (AX1), et une autre ligne imaginaire orthogonale à la première ligne de référence (AX1) et entrant en contact avec la périphérie extérieure de l'une des portions de bride (18Aa, 18Ab ; 19Aa, 19Ab) est définie en tant que seconde ligne de référence (AX2),
la portion de fil (13Aa ; 14Aa) est prévue le long de la seconde ligne de référence (AX2) ou est prévue à une position plus près de la portion d'enroulement (13Ab) que la seconde ligne de référence (AX2),
une première portion saillante (85 ; 86) faisant saillie dans la direction circonférentielle est prévue sur la seconde surface latérale (66A),
une seconde portion saillante (80A ; 82A) faisant saillie dans la direction circonférentielle est prévue sur la seconde surface latérale (66A) sur un côté radialement extérieur de la première portion saillante (85 ; 86),
à une portion où une périphérie extérieure de l'une des portions de bride (18Aa, 18Ab ; 19Aa, 19Ab) et la seconde surface latérale (66A) entrent en contact l'une avec l'autre, une portion de découpe (18Ac ; 19Ac) qui est évidée radialement vers l'intérieur à partir de la périphérie extérieure de l'une des portions de bride (18Aa, 18Ab ; 19Aa, 19Ab) est prévue,
dans lequel la portion de fil (13Aa ; 14Aa) est connectée à la borne (18Ag ; 19Ag) à partir d'entre la première portion saillante (85 ; 86) et la portion de découpe (18Ac; 19Ac) le long d'une surface arrière de la première portion saillante (85 ; 86) et d'une surface avant de la seconde portion saillante (80A ; 82A),
dans lequel une portion évidée (81 ; 83) évidée dans une direction le long de l'axe central (AX) de la bobine (13A ; 14A) est prévue sur la face avant de la seconde portion saillante (80A ; 82A).

2. Corps de bobine (18A ; 19A) avec bobine (13A ; 14A) selon la revendication 1, dans lequel
la portion de fil (13Aa ; 14Aa) entre en contact avec la seconde surface latérale (66A) entre la première portion saillante (85 ; 86) et la portion de découpe (18Ac ; 19Ac).

3. Corps de bobine (18A ; 19A) avec bobine (13A ; 14A) selon la revendication 1 ou 2, dans lequel
ladite portion de fil (13Aa ; 14Aa) et une autre portion de fil (13Ac) de la bobine (13A ; 14A) sont attachées à la portion d'attache de borne (18Ae ; 19Ae).

4. Dispositif de détection de couple (10A), comprenant :
le corps de bobine (18A ; 19A) avec une bobine (13A ; 14A) selon l'une quelconque des revendications 1 à 3, la bobine (13A ; 14A) variant en impédance selon un couple généré sur un arbre rotatif (11) du dispositif de détection de couple ;
une culasse (15 ; 17) ayant une portion cylindrique (15a ; 17a) qui, de façon interne, ajuste et retient le corps de bobine (18A ; 19A) ;
un couvercle de culasse (16) ajusté à force sur un diamètre intérieur de la portion cylindrique (15a ; 17a) ; et
la portion d'attache de borne (18Ae ; 19Ae) qui est prévue afin de faire saillie vers l'extérieur dans une direction radiale du corps de bobine (18A ; 19A) à partir de l'une des portions de bride (18Aa, 18Ab ; 19Aa, 19Ab) du corps de bobine (18A ; 19A) et pour attacher les deux extrémités de la bobine (13A ; 14A), dans lequel
une portion chanfreinée (91Aa ; 91Ab ; 91Ac ; 92Aa ; 92Ab ; 93a ; 93b) est formée dans au moins une partie d'une portion de la portion d'attache de borne (18Ae ; 19Ae) faisant face à une portion incurvée d'un fil métallique conducteur constituant la bobine (13A ; 14A).
